# EUROPEAN PATENT APPLICATION

(11) **EP 4 628 383 A1**
(43) Date of publication of application: **08.10.2025**
(21) Application number: 22969604.2
(22) Date of filing: 28.12.2022
(51) Int. Cl.: B60W 50/14, B60W 40/08, B60W 30/09, B60W 40/02

(54) **AUTONOMOUS DRIVING METHOD AND DEVICE, AND VEHICLE**

(71) Applicant: Shenzhen Yinwang Intelligent Technologies Co., Ltd., Shenzhen, Guangdong 518110 (CN)
(72) Inventor: LV, Qi, Shenzhen, Guangdong 518129 (CN); SHEN, Haiyang, Shenzhen, Guangdong 518129 (CN)
(74) Representative: Pfenning, Meinig & Partner mbB
(86) International application number: PCT/CN2022/143003
(87) International publication number: WO 2024/138453

(57) **Abstract**

An autonomous driving method and apparatus, and a vehicle are provided. The autonomous driving method includes: An autonomous driving apparatus obtains traveling data and environment data of a vehicle when the vehicle is in a manual driving mode (S101), and when the vehicle has a risk, outputs warning information based on the traveling data and the environment data of the vehicle, to prompt a driver that the vehicle has the risk (S104); the autonomous driving apparatus obtains information about feedback behavior that is of the driver and that is based on the warning information, and determines a driving status of the driver (S106); and when the driving status is an abnormal state, the autonomous driving apparatus switches a driving mode of the vehicle from the manual driving mode to an autonomous driving mode, to enable the vehicle to enter an autonomous driving state (S108). The autonomous driving apparatus can accurately switch the vehicle to the autonomous driving mode in time when the vehicle has the risk and the driving status of the driver is the abnormal state. In this way, an autonomous driving system takes over the vehicle, thereby improving driving safety of the vehicle.

## Description

### TECHNICAL FIELD

This application relates to the field of autonomous driving technologies, and in particular, to an autonomous driving method and apparatus, and a vehicle.

### BACKGROUND

With development of science and technology and application of artificial intelligence technologies, autonomous driving technologies are rapidly developed and widely applied. Generally, an autonomous driving vehicle requires a driver and an autonomous driving system to jointly undertake a driving task of the vehicle, namely, human-machine co-driving. Specifically, the autonomous driving vehicle has two driving modes: an autonomous driving mode and a manual driving mode. In the autonomous driving mode, the driver does not need to manually operate the vehicle, and the autonomous driving system controls a speed, steering, and the like of the vehicle. In the manual driving mode, the driver has control right on the vehicle, and manually controls the speed and the steering of the vehicle.

Currently, the driver may manually switch the driving mode based on a road condition, willingness of the driver, and the like. However, in some emergencies, if the driver cannot manually switch the driving mode in time, for example, switch from the manual driving mode to the autonomous driving mode, the vehicle cannot be accurately switched to the autonomous driving mode in time. As a result, the vehicle has a risk of a traffic accident, and driving safety of the vehicle is reduced.

### SUMMARY

This application provides an autonomous driving method and apparatus, and a vehicle, to accurately monitor a driving status of a driver in an emergency (that is, when the vehicle has a risk), and switch the vehicle to an autonomous driving mode in time, so that an autonomous driving system takes over the vehicle, thereby improving driving safety of the vehicle.

To achieve the foregoing objective, the following technical solutions are used in this application.

According to a first aspect, an autonomous driving method is provided, and is applied to a vehicle. The method includes: An autonomous driving apparatus obtains traveling data and environment data of the vehicle when a driving mode of the vehicle is a manual driving mode; when the vehicle has a risk, the autonomous driving apparatus outputs warning information based on the traveling data and the environment data of the vehicle, where the warning information is used to prompt a driver that the vehicle has the risk; the autonomous driving apparatus obtains information about feedback behavior that is of the driver and that is based on the warning information; the autonomous driving apparatus determines a driving status of the driver based on the information about the feedback behavior, where the driving status includes an abnormal state or a normal state; and the autonomous driving apparatus switches the driving mode of the vehicle from the manual driving mode to an autonomous driving mode when the driving status is the abnormal state, to enable the vehicle to enter an autonomous driving state.

In the method, first, the autonomous driving apparatus determines, based on the obtained traveling data and the obtained environment data of the vehicle, whether the vehicle has the risk, and outputs the warning information when the vehicle has the risk, to prompt the driver that the vehicle has the risk. Then, the autonomous driving apparatus determines the driving status of the driver based on the obtained information about the feedback behavior that is of the driver and that is based on the warning information. The autonomous driving apparatus switches the vehicle to the autonomous driving mode when the driving status is the abnormal state. In this way, when the vehicle has the risk and the driving status of the driver is the abnormal state, the autonomous driving apparatus can accurately switch the vehicle to the autonomous driving mode in time, so that an autonomous driving system takes over the vehicle, thereby improving safety of driving the vehicle by the driver.

With reference to the first aspect, in an optional implementation, that the autonomous driving apparatus outputs warning information based on the traveling data and the environment data of the vehicle includes: The autonomous driving apparatus determines a warning level based on the traveling data and the environment data of the vehicle, where the warning level indicates a magnitude of the risk that is to occur on the vehicle. The autonomous driving apparatus outputs the warning information corresponding to the warning level. In this implementation, the autonomous driving apparatus can output, based on the traveling data and the environment data of the vehicle, the warning information corresponding to the warning level, to remind the driver of the magnitude of the risk that is to occur on the vehicle. In this way, the driver can detect the magnitude of the risk of the vehicle in time, thereby improving driving experience of the driver.

With reference to the first aspect, in an optional implementation, a higher warning level indicates more types of prompt information included in corresponding warning information, and the warning information includes one or more of the following: visual prompt information, sound prompt information, or seat vibration prompt information. In this way, the driver determines the magnitude of the risk of the vehicle based on different types of received prompt information, so that the driver can perform a feedback action in time based on the warning information, to reduce the risk of the vehicle. This improves driving experience of the driver.

With reference to the first aspect, in an optional implementation, that the autonomous driving apparatus determines a warning level based on the traveling data and the environment data of the vehicle includes: The autonomous driving apparatus determines risk information based on the traveling data and the environment data of the vehicle, where the risk information includes a risk level; and the autonomous driving apparatus determines the warning level based on the risk level. In this implementation, the autonomous driving apparatus can determine the risk level based on the traveling data and the environment data of the vehicle, to further determine the warning level. In this way, the autonomous driving apparatus can accurately determine the warning level, thereby improving accuracy of outputting, by the autonomous driving apparatus, the warning information corresponding to the warning level.

With reference to the first aspect, in an optional implementation, the risk information further includes a risk type, and the information about the feedback behavior corresponds to the risk type. The risk type includes one or more of the following: a rear-end collision, scratching, lane departure, red-light running, speeding, or an obstacle. The information about the feedback behavior includes a status of a manipulable component of the vehicle. In this way, the autonomous driving apparatus may obtain, based on the risk type, the information about the feedback behavior corresponding to the risk type. This can not only reduce a data volume of the information that is about the feedback behavior and that is obtained by the autonomous driving apparatus, but also improve efficiency of further determining the driving status of the driver by the autonomous driving apparatus based on the information about the feedback behavior.

With reference to the first aspect, in an optional implementation, that the autonomous driving apparatus determines the risk information based on the traveling data and the environment data of the vehicle includes: The autonomous driving apparatus inputs the traveling data and the environment data of the vehicle into a first model to obtain the risk information. In this way, accuracy and efficiency of determining the risk information by the autonomous driving apparatus based on the traveling data and the environment data of the vehicle can be improved.

With reference to the first aspect, in an optional implementation, before that the autonomous driving apparatus switches the driving mode of the vehicle from the manual driving mode to an autonomous driving mode, the method further includes: The autonomous driving apparatus determines that one or more of a physiological status of the driver and the warning level meet a preset condition. The preset condition includes: the physiological status is an abnormal state, or the warning level is greater than or equal to a warning threshold, or the physiological status is a normal state and the warning level is greater than or equal to a warning threshold. In this implementation, the autonomous driving apparatus can determine, based on whether the physiological status of the driver is an abnormal state and the warning level, when to switch the driving mode of the vehicle from the manual driving mode to the autonomous driving mode. In this way, accuracy of switching to the autonomous driving mode of the vehicle by the autonomous driving apparatus can be further improved.

With reference to the first aspect, in an optional implementation, the method further includes: The autonomous driving apparatus obtains physiological feature data of the driver; and inputs the physiological feature data into a second model to obtain the physiological status of the driver. In this way, accuracy and efficiency of determining the physiological status by the autonomous driving apparatus based on the physiological feature data of the driver can be improved.

With reference to the first aspect, in an optional implementation, that the autonomous driving apparatus determines a driving status of the driver based on the information about the feedback behavior includes: The autonomous driving apparatus inputs the information about the feedback behavior into a third model, to obtain the driving status of the driver. In this way, accuracy and efficiency of determining the driving status by the autonomous driving apparatus based on the information about the feedback behavior can be improved.

According to a second aspect, an autonomous driving apparatus is provided, including a first obtaining module, a decision-making module, a warning output module, and a second obtaining module. The first obtaining module is configured to obtain traveling data and environment data of a vehicle when a driving mode of the vehicle is a manual driving mode. The decision-making module is configured to: when the vehicle has a risk, control, based on the traveling data and the environment data of the vehicle, the warning output module to output warning information, where the warning information is used to prompt a driver that the vehicle has the risk. The second obtaining module is configured to obtain information about feedback behavior that is of the driver and that is based on the warning information. The decision-making module is further configured to: determine a driving status of the driver based on the information about the feedback behavior, where the driving status includes an abnormal state or a normal state; and switch the driving mode of the vehicle from the manual driving mode to an autonomous driving mode when the driving status is the abnormal state, to enable the vehicle to enter an autonomous driving state.

With reference to the second aspect, in an optional implementation, the decision-making module is specifically configured to: determine a warning level based on the traveling data and the environment data of the vehicle, where the warning level indicates a magnitude of the risk that is to occur on the vehicle; and control the warning output module to output the warning information corresponding to the warning level.

With reference to the second aspect, in an optional implementation, a higher warning level indicates more types of prompt information included in corresponding warning information. The warning information includes one or more of the following: visual prompt information, sound prompt information, or seat vibration prompt information.

With reference to the second aspect, in an optional implementation, in a process of determining the warning level based on the traveling data and the environment data of the vehicle, the decision-making module is specifically configured to: determine risk information based on the traveling data and the environment data of the vehicle, where the risk information includes a risk level; and determine the warning level based on the risk level.

With reference to the second aspect, in an optional implementation, the risk information further includes a risk type, and the information about the feedback behavior corresponds to the risk type. The risk type includes one or more of the following: a rear-end collision, scratching, lane departure, red-light running, speeding, or an obstacle; and the information about the feedback behavior includes a status of a manipulable component of the vehicle.

With reference to the second aspect, in an optional implementation, in a process of determining the risk information based on the traveling data and the environment data of the vehicle, the decision-making module is specifically configured to input the traveling data and the environment data of the vehicle into a first model to obtain the risk information.

With reference to the second aspect, in an optional implementation, the decision-making module is further configured to determine that one or more of a physiological status of the driver and the warning level meet a preset condition. The preset condition includes: the physiological status is an abnormal state, or the warning level is greater than or equal to a warning threshold, or the physiological status is a normal state and the warning level is greater than or equal to a warning threshold.

With reference to the second aspect, in an optional implementation, the second obtaining module is further configured to obtain physiological feature data of the driver; and the decision-making module is further configured to input the physiological feature data into a second model to obtain the physiological status of the driver.

With reference to the second aspect, in an optional implementation, in a process of determining the driving status of the driver based on the information about the feedback behavior, the decision-making module is specifically configured to input the information about the feedback behavior into a third model, to obtain the driving status of the driver.

With reference to the second aspect, in an optional implementation, the apparatus is a vehicle-mounted terminal, and the vehicle-mounted terminal may be, for example, a vehicle-mounted computing platform or a controller.

With reference to the second aspect, in an optional implementation, the apparatus may be a server, and the server is located in a cloud.

According to a third aspect, a vehicle is provided, including at least one sensor, the autonomous driving apparatus according to the second aspect and any one of the optional implementations of the second aspect, and a warning output apparatus. The at least one sensor is configured to obtain initial traveling data and initial environment data of the vehicle, where the initial traveling data and the initial environment data are used by the autonomous driving apparatus to generate the traveling data and the environment data; and the warning output apparatus is configured to output warning information to a driver of the vehicle.

With reference to the third aspect, in an optional implementation, the vehicle further includes an autonomous driving system, used to take over the vehicle after the autonomous driving apparatus switches the vehicle to an autonomous driving mode.

According to a fourth aspect, an electronic device is provided, including a memory and one or more processors. The memory is coupled to the processor, the memory stores computer program code, the computer program code includes computer instructions, and when the computer instructions are executed by the processor, the electronic device is enabled to perform the method according to the first aspect and any one of the optional implementations of the first aspect. The electronic device may be a chip.

According to a fifth aspect, a computer-readable storage medium is provided, including computer instructions. When the computer instructions are run on an electronic device, the electronic device is enabled to perform the method according to the first aspect and any one of the optional implementations of the first aspect.

According to a sixth aspect, a computer program product is provided. When the computer program product runs on a computer, the computer is enabled to perform the method according to the first aspect and any one of the optional implementations of the first aspect.

It may be understood that, for beneficial effect that can be achieved by the autonomous driving apparatus in the second aspect, the vehicle in the third aspect, the electronic device in the fourth aspect, the computer-readable storage medium in the fifth aspect, and the computer program product in the sixth aspect, refer to beneficial effect in the first aspect and any one of the possible designs of the first aspect. Details are not described herein again.

### BRIEF DESCRIPTION OF DRAWINGS

FIG. 1 is a diagram of a system architecture of a vehicle according to an embodiment of this application;
FIG. 2 is a diagram of a principle of an autonomous driving method according to an embodiment of this application;
FIG. 3 is a diagram of a structure of an autonomous driving apparatus according to an embodiment of this application;
FIG. 4A and FIG. 4B are a schematic flowchart 1 of an autonomous driving method according to an embodiment of this application;
FIG. 5A and FIG. 5B are a schematic flowchart 2 of an autonomous driving method according to an embodiment of this application;
FIG. 6 is a diagram of a process in which a first model determines risk information based on traveling data and environment data of a vehicle according to an embodiment of this application;
FIG. 7 is a diagram of outputting warning information according to an embodiment of this application;
FIG. 8 is a diagram of a process in which a third model determines a driving status based on information about feedback behavior according to an embodiment of this application;
FIG. 9 is a diagram of a process in which a second model determines a physiological status based on physiological feature data according to an embodiment of this application;
FIG. 10A and FIG. 10B are a schematic flowchart 3 of an autonomous driving method according to an embodiment of this application;
FIG. 11A and FIG. 11B are a schematic flowchart 4 of an autonomous driving method according to an embodiment of this application; and
FIG. 12 is a diagram of composition of a chip system according to an embodiment of this application.

### DESCRIPTION OF EMBODIMENTS

In the descriptions of this application, unless otherwise specified, "/" indicates that associated objects are in an "or" relationship. For example, A/B may represent A or B. In this application, "and/or" describes only an association relationship between associated objects and represents that three relationships may exist. For example, A and/or B may indicate: Only A exists, both A and B exist, and only B exists, where A and B may be singular or plural. In addition, in the descriptions of this application, unless otherwise specified, "a plurality of" means two or more than two. The expression "at least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the term such as "example" or "for example" is intended to present a related concept in a specific manner for ease of understanding.

With development of science and technology and application of artificial intelligence technologies, autonomous driving technologies are rapidly developed and widely applied. In the SAE J3016 standard, the Society of Automotive Engineers International classifies autonomous driving of a vehicle into the following six levels: manual driving (L0), assisted driving (L1), partial autonomous driving (L2), conditional autonomous driving (L3), highly autonomous driving (L4), and fully autonomous driving (L5). Generally, if an autonomous driving vehicle is at an autonomous driving level from L1 to L4, a driver and an autonomous driving system need to jointly undertake a driving task of the vehicle, namely, human-machine co-driving.

Specifically, the autonomous driving vehicle has two driving modes: an autonomous driving mode and a manual driving mode. In the autonomous driving mode, the driver does not need to manually operate the vehicle, and the autonomous driving system controls a speed, steering, and the like of the vehicle. In the manual driving mode, the driver has control right on the vehicle, and manually controls the speed and the steering of the vehicle.

Currently, the driver may manually switch the driving mode based on a road condition, willingness of the driver, and the like. For example, when the driver feels tired after driving the vehicle for long time, the driver may manually switch the vehicle from the manual driving mode to the autonomous driving mode, so that the autonomous driving system takes over the vehicle.

However, in some emergencies, for example, when the vehicle has a risk of a rear-end collision, if the driver cannot respond in time due to fatigue driving, loss of consciousness, drunk driving, or the like, the vehicle cannot accurately switch to the autonomous driving mode in time. In this way, the vehicle has a risk of a traffic accident, and safety of driving the vehicle by the driver is reduced.

To resolve a problem that the vehicle cannot accurately switch the driving mode in time in an emergency, embodiments of this application provide an autonomous driving method. In the method, when a vehicle has a risk, warning information can be sent, to prompt a driver to provide feedback in time. Then, whether a driving status of the driver is a normal state is determined based on feedback behavior of the driver. When the driving status of the driver is an abnormal state, a driving mode of the vehicle is automatically switched to an autonomous driving mode, to enable the vehicle to enter an autonomous driving state. In this way, accuracy and timeliness of switching to the autonomous driving mode by the vehicle can be improved, and safety of driving the vehicle by the driver can be further improved.

The following describes the solutions provided in embodiments of this application with reference to the accompanying drawings in this specification.

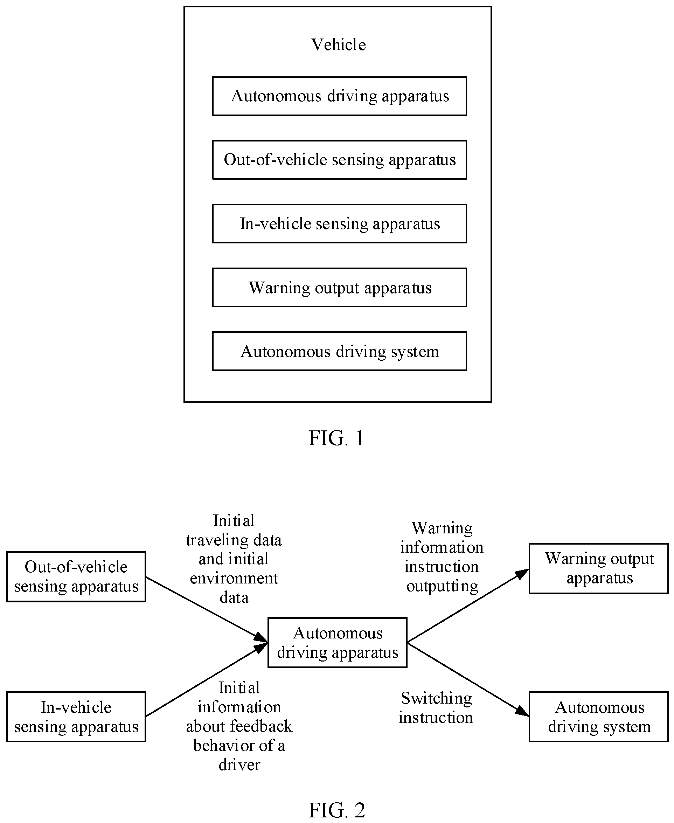

The autonomous driving method provided in embodiments of this application may be applied to an application scenario in which a driver drives a vehicle. FIG. 1 is a diagram of a system architecture of a vehicle according to an embodiment of this application. As shown in FIG. 1, the vehicle includes an autonomous driving apparatus, an out-of-vehicle sensing apparatus, an in-vehicle sensing apparatus, a warning output apparatus, and an autonomous driving system.

The out-of-vehicle sensing apparatus may be configured to obtain initial traveling data and initial environment data of the vehicle. The out-of-vehicle sensing apparatus includes at least one sensor. For example, the out-of-vehicle sensing apparatus may include a camera, a Hall sensor, an accelerometer, a gyroscope, a lidar, a millimeter-wave radar, an ultrasonic radar, and the like.

The in-vehicle sensing apparatus may be configured to obtain initial information about feedback behavior of a driver. For example, the in-vehicle sensing apparatus may include a three-dimensional (three-dimensional, 3D) camera, an alcohol sensor, a wearable band, a watch, and the like.

The warning output apparatus is configured to output warning information to the driver. The warning output apparatus may include a central control display, a head-up display, a lighting apparatus, a sound box apparatus, a buzzer apparatus, a seat vibration apparatus, and the like.

The autonomous driving system may implement at least one assisted autonomous driving function, for example, including a precollision system (precollision system, PCS), adaptive cruise control (adaptive cruise control, ACC), lane keeping assist (lane keeping assist, LKA), cross traffic alert (cross traffic alert, CTA), rear cross traffic alert (rear cross traffic alert, RCTA), blind spot warning (blind spot warning, BSW), disabling vehicle alarm, traffic jam assist (traffic jam assist, TJA), automatic parking assist (automatic parking assist, APA), and the like.

The autonomous driving apparatus may be configured to: automatically switch a driving mode of the vehicle to an autonomous driving mode in time when the vehicle is in an emergency and a driving status of the driver is an abnormal state, to enable an autonomous driving system to take over the vehicle, and enable the vehicle to enter an autonomous driving state.

It should be noted that the vehicle in this embodiment of this application may be a car, a truck, a motorcycle, a bus, a recreational vehicle, a playground vehicle, a construction vehicle, a tram, a golf cart, a train, or the like. This is not particularly limited in this embodiment of this application.

The autonomous driving method provided in this embodiment of this application may be applied to the foregoing autonomous driving apparatus. The system framework shown in FIG. 1 is used as an example. As shown in FIG. 2, the autonomous driving method provided in this embodiment of this application is specifically as follows: The autonomous driving apparatus determines, based on initial traveling data and initial environment data that are obtained by the out-of-vehicle sensing apparatus, whether the vehicle has a risk; the autonomous driving apparatus outputs a warning information instruction to the warning output apparatus when the vehicle has a risk, to control the warning output apparatus to send warning information; then, the autonomous driving apparatus determines, based on the initial information that is of feedback behavior of the driver and that is obtained by the in-vehicle sensing apparatus, whether a driving status of the driver is a normal state; and the autonomous driving apparatus sends a switching instruction to the autonomous driving system when the driving status of the driver is an abnormal state, to trigger the autonomous driving system to take over the vehicle. In the method, the autonomous driving apparatus can automatically switch the driving mode of the vehicle to the autonomous driving mode when the vehicle has the risk and the driving status of the driver is the abnormal state. In this way, accuracy and timeliness of switching to the autonomous driving mode by the vehicle can be improved, and safety of driving the vehicle by the driver can be further improved.

The autonomous driving apparatus may be a functional module or a chip in the vehicle, or a system on a chip or a vehicle-mounted terminal. The vehicle-mounted terminal may be, for example, a vehicle-mounted computing platform or a controller. The autonomous driving apparatus may be configured to perform an autonomous driving method in the following embodiments.

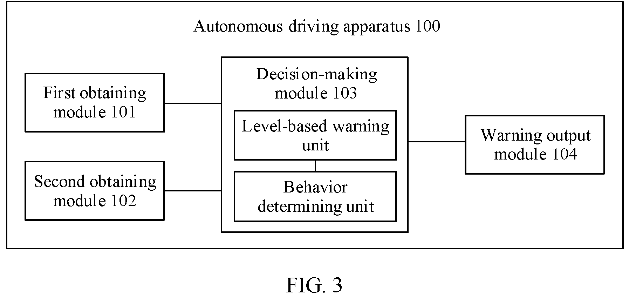

For example, an autonomous driving apparatus 100 is a vehicle-mounted terminal. FIG. 3 is a diagram of a hardware structure of the autonomous driving apparatus 100. For example, as shown in FIG. 3, the autonomous driving apparatus 100 includes a first obtaining module 101, a second obtaining module 102, a decision-making module 103, and a warning output module 104. The first obtaining module 101 is configured to obtain traveling data and environment data of a vehicle. The second obtaining module 102 is configured to obtain information that is about feedback behavior of a driver and that is based on warning information and physiological feature data of the driver.

The decision-making module 103 further includes a level-based warning unit and a behavior determining unit. Specifically, the level-based warning unit may be configured to: when the vehicle has a risk, control, based on the traveling data and the environment data of the vehicle, the warning output module 104 to output the warning information, to prompt the driver that the vehicle has the risk. The behavior determining unit is configured to: determine a driving status of the driver based on the information about the feedback behavior; and switch a driving mode of the vehicle from a manual driving mode to an autonomous driving mode when the driving status is an abnormal state, to enable the vehicle to enter an autonomous driving state.

The autonomous driving apparatus may be a general-purpose apparatus or a dedicated apparatus. A type of the autonomous driving apparatus is not limited in this embodiment of this application. The autonomous driving apparatus may be a device having a structure similar to that in FIG. 3.

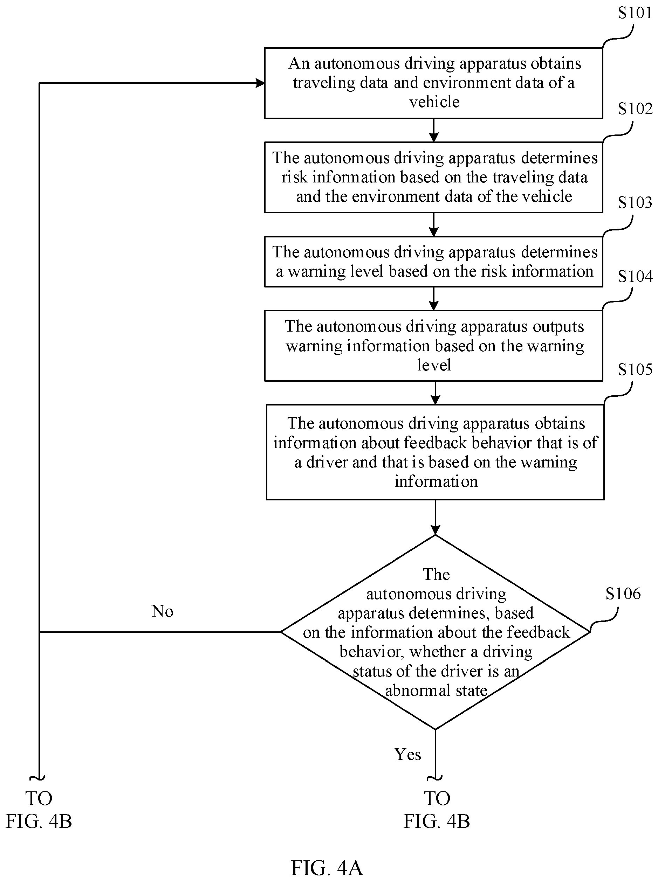

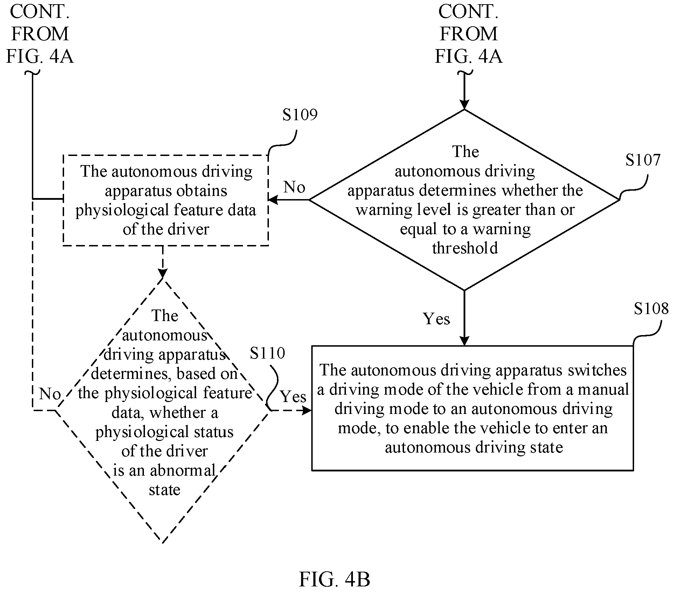

With reference to FIG. 2 and FIG. 3, the following describes the autonomous driving method provided in this embodiment of this application by using an example in which the autonomous driving apparatus controls the vehicle to switch from the manual driving mode to the autonomous driving mode. FIG. 4A and FIG. 4B are a schematic flowchart of an autonomous driving method according to an embodiment of this application. As shown in FIG. 4A and FIG. 4B, the method may include the following steps S101 to S110.

S101: An autonomous driving apparatus obtains traveling data and environment data of a vehicle.

In this embodiment of this application, the autonomous driving apparatus may obtain the traveling data and the environment data of the vehicle when a driving mode of the vehicle is a manual driving mode. The traveling data of the vehicle represents a traveling status of the vehicle. For example, the traveling data may include at least one of a speed, an acceleration, and a yaw angle of the vehicle. The environment data represents a traveling environment status outside the vehicle. For example, the environment data may include a traveling status of another vehicle outside the vehicle, a status of a road on which the vehicle travels, and the like. For example, the environment data may include at least one of a distance between the vehicle and a vehicle ahead, a speed of the vehicle ahead, a distance between the vehicle and a vehicle behind, road surface condition information, lane line information, roadside information, and traffic signal light information.

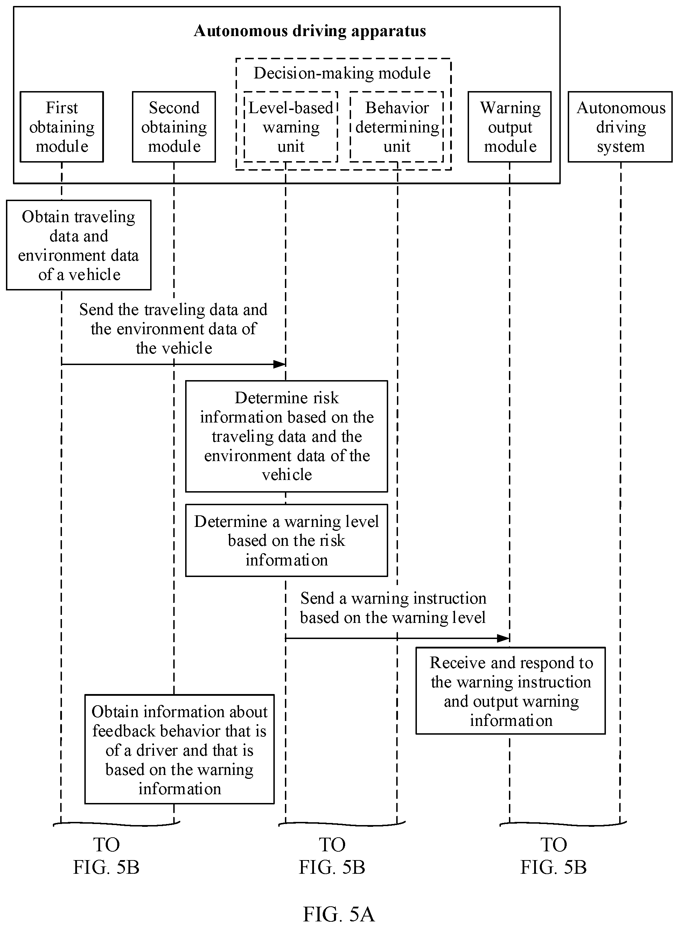

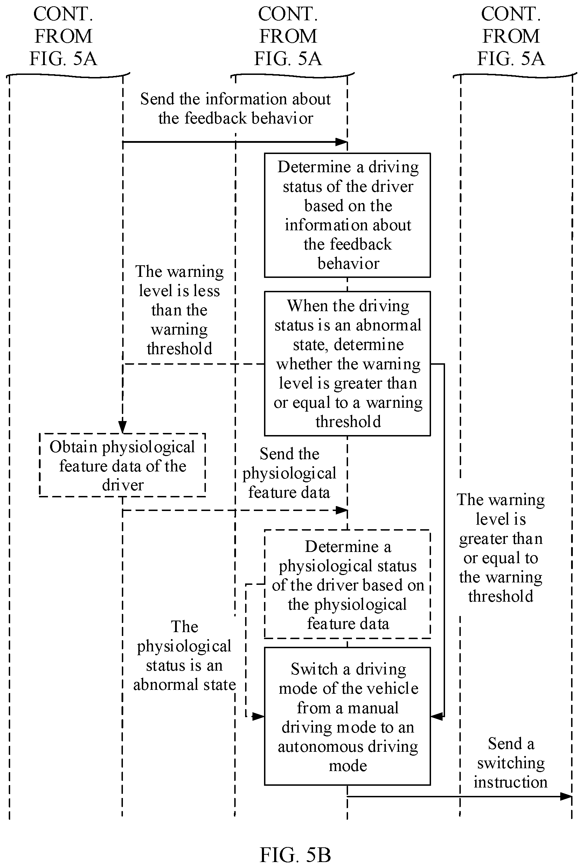

In an implementation, as shown in FIG. 5A and FIG. 5B, S101 may be performed by a first obtaining module in the autonomous driving apparatus. For example, the first obtaining module may obtain the traveling data and the environment data of the vehicle by using an out-of-vehicle sensing apparatus. Specifically, after obtaining initial traveling data and initial environment data of the vehicle, the out-of-vehicle sensing apparatus may send the obtained initial traveling data and the obtained initial environment data to the first obtaining module. The initial traveling data includes, for example, a wheel rotation speed, an acceleration value, an angular velocity value, an electromagnetic wave frequency difference, and a laser transmit-receive time difference. The initial environment data includes, for example, image data.

After the first obtaining module receives the initial traveling data and the initial environment data from the out-of-vehicle sensing apparatus, the first obtaining module processes the initial traveling data and the initial environment data to obtain the traveling data and the environment data of the vehicle.

In an example, the first obtaining module may obtain the wheel rotation speed by using a Hall sensor, and then obtain the speed of the vehicle by multiplying the wheel rotation speed by a tire circumference.

In another example, the first obtaining module may alternatively obtain the acceleration value and the angular velocity value by using an accelerometer and a gyroscope respectively. Then, the first obtaining module performs integration on the angular velocity value to obtain a function of an angle relative to time, to calculate a pitch angle and a roll angle of the vehicle. Finally, the first obtaining module removes gravity components of the pitch angle and the roll angle from the acceleration value, to obtain an acceleration of the vehicle.

In still another example, the first obtaining module may alternatively obtain the electromagnetic wave frequency difference by using a millimeter-wave radar. Then, the first obtaining module may obtain the distance between the vehicle and the vehicle ahead and the distance between the vehicle and the vehicle behind based on the electromagnetic wave frequency difference and a difference between transmit time and receive time of the millimeter-wave radar.

In still another example, the first obtaining module may further obtain the laser transmit-receive time difference by using a lidar. Then, the first obtaining module obtains a relative distance between the vehicle and the vehicle ahead based on the laser transmit-receive time difference and a speed of light, and obtains a relative speed by dividing a difference between two relative distances by time. Finally, the first obtaining module may determine and obtain a speed of the vehicle ahead based on the relative speed plus the speed of the vehicle.

In still another example, the first obtaining module may further obtain image data of a road surface on which the vehicle travels by using a camera. Then, the first obtaining module recognizes the image data of the road surface by using a deep learning algorithm, to determine the road surface condition information, the lane line information, and the roadside information.

S102: The autonomous driving apparatus determines risk information based on the traveling data and the environment data of the vehicle.

Specifically, the autonomous driving apparatus may determine, based on the traveling data and the environment data of the vehicle that are obtained in S101, whether the vehicle has a risk. When the vehicle has the risk, the autonomous driving apparatus may determine the risk information, to further send warning information. It should be noted that, in this embodiment of this application, a case in which the vehicle has the risk may be a case in which the vehicle is about to violate a traffic rule, or a case in which a traffic accident or the like is about to be caused to endanger safety of the driver.

In some embodiments, the risk information may include a risk level. The risk level represents a magnitude and an emergency degree of the risk of the vehicle. A higher risk level indicates a higher risk of the vehicle and a higher risk emergency degree. A relationship between a level number and the risk level may be set as required. In an implementation, a larger level number indicates a higher risk. In another implementation, a smaller level number indicates a higher risk. For example, the risk level may be a level 1, a level 2, or a level 3. Levels of the level 1, the level 2, and the level 3 are in ascending order, risks that are of the vehicle and that correspond to the level 1, the level 2, and the level 3 are also in ascending order, and emergency degrees are also in ascending order.

In some embodiments, the risk information may further include a risk type. The risk type represents a type of the risk that occurs on the vehicle. For example, the risk type may include one or more of the following: a rear-end collision, scratching, lane departure, red-light running, speeding, or an obstacle. That the risk type is the obstacle may indicate that there is a risk of falling or collision caused by, for example, a deep pit, a deep well, a mound, or a water-filled barrier, on a road on which the vehicle travels.

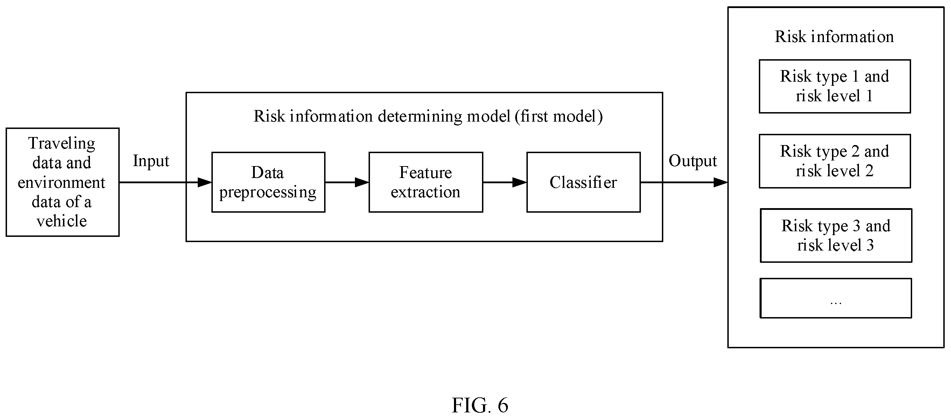

In an implementation, as shown in FIG. 5A and FIG. 5B, S102 may be implemented by a level-based warning unit of a decision-making module in the autonomous driving apparatus. The level-based warning unit may input the traveling data and the environment data of the vehicle into a first model (namely, a risk information determining model) to obtain the risk information. For example, as shown in FIG. 6, FIG. 6 is a diagram of determining the risk information by using the first model according to an embodiment of this application. The first model has a function of determining the risk information based on the traveling data and the environment data of the vehicle. Specifically, processing such as data preprocessing, feature extraction, and classifier classification may be sequentially performed on the traveling data and the environment data that are of the vehicle and that are input into the first model, to output the risk information, for example, including the risk type and the risk level.

In some embodiments, the first model may be obtained through construction by using a classification machine learning algorithm. The classification machine learning algorithm may be a logistic regression (logistic regression, LR) algorithm, a naive Bayes (naive bayes, NB) algorithm, a k-nearest neighbors (k-nearest neighbors, KNN) algorithm, a decision tree (decision tree, DT) algorithm, or a support vector machine (support vector machine, SVM) algorithm. A construction algorithm used by the first model and a specific construction process are not specifically limited in this application.

In some embodiments, the first model may determine the risk information based on a mapping relationship between the risk information and the traveling data and the environment data of the vehicle. Table 1 is a mapping table between the risk information and the traveling data and the environment data of the vehicle shown in this embodiment of this application. As shown in Table 1, the traveling data of the vehicle includes the speed and the acceleration of the vehicle. The environment data includes: the distance between the vehicle and the vehicle ahead (referred to as an ahead vehicle distance in the table), the speed of the vehicle ahead (referred to as an ahead vehicle speed in the table), the distance between the vehicle and the vehicle behind (referred to as a behind vehicle distance in the table), and the road surface condition information. Risk information includes the risk type and the risk level, including a rear-end collision level 1, a rear-end collision level 2, and a rear-end collision level 3. For example, when the ahead vehicle distance is less than 10 m, the behind vehicle distance is less than 10 m, the vehicle speed is greater than 100 km/h, the vehicle acceleration is greater than 10 m/s², the ahead vehicle speed is less than 60 km/h, and the road surface is an ice surface, the level-based warning unit may determine, by using the first model, that the risk information is the rear-end collision level 3. In other words, in this case, the vehicle has a high risk of a rear-end collision.

**Table 1**

| Traveling data and environment data of a vehicle | | | | | | Risk information | |
|---|---|---|---|---|---|---|---|
| Ahead vehicle distance (m) | Behind vehicle distance (m) | Vehicle speed (km/h) | Vehicle acceleration (m/s²) | Ahead vehicle speed (km/h) | Road surface condition | Risk type | Risk level |
| <100 | <100 | >80 | >5 | <80 | Dry | Rear-end collision | Level 1 |
| <50 | <50 | >90 | >8 | <70 | Water surface | Rear-end collision | Level 2 |
| <10 | <10 | >100 | >10 | <60 | Ice surface | Rear-end collision | Level 3 |

It should be noted that parameters in the traveling data and the environment data of the vehicle in Table 1 and specific values of the parameters are merely examples for description. A specific value of each parameter and a rule for determining the risk information based on each parameter (for example, setting a weight coefficient for each parameter) may be set based on an actual application situation. This is not specifically limited in this application.

S103: The autonomous driving apparatus determines a warning level based on the risk information.

Further, the autonomous driving apparatus may determine, based on the risk information, a magnitude of the risk of the vehicle, to obtain the warning level. The warning level may indicate the magnitude of the risk that is to occur on the vehicle in a manual driving state. A higher warning level indicates a higher risk that is to occur on the vehicle.

In an implementation, as shown in FIG. 5A and FIG. 5B, S103 may be implemented by the level-based warning unit of the decision-making module in the autonomous driving apparatus. In some embodiments, when the risk information includes the risk level, the level-based warning unit may determine the warning level based on the risk level. Specifically, the warning level is in one-to-one correspondence with the risk level. A higher risk level indicates a higher warning level. For example, the risk information shown in Table 1 is used as an example. The risk level 1 corresponds to level-1 warning, the risk level 2 corresponds to level-2 warning, and the risk level 3 corresponds to level-3 warning.

S104: The autonomous driving apparatus outputs the warning information based on the warning level.

Specifically, the autonomous driving apparatus may output the corresponding warning information based on the warning level, and the warning information may be used to prompt the driver that the vehicle in the manual driving state has the risk. In this way, the driver can detect the risk of the vehicle in time, so that the driver performs feedback behavior in time, thereby reducing the risk of the vehicle.

In some embodiments, the warning information corresponds to the warning level, and a higher warning level indicates more types of warning information that a warning output module is triggered by a warning instruction to output. For example, the warning information may include one or more of the following: visual warning information, sound warning information, and seat vibration warning information. The sound warning information may further specifically include voice warning information and buzzer alert warning information.

For example, Table 2 is a mapping table between the warning level and the warning information in this embodiment of this application. As shown in Table 2, warning levels include the level-1 warning, the level-2 warning, and the level-3 warning. The warning information corresponding to the level-1 warning includes the visual warning information. The warning information corresponding to the level-2 warning includes the visual warning information and the voice warning information. The warning information corresponding to the level-3 warning includes the visual warning information, the voice warning information, the buzzer alert warning information, and the seat vibration warning information.

**Table 2**

| Warning level | Warning information | | | |
|---|---|---|---|---|
| | Visual warning information | Voice warning information | Buzzer alarm warning information | Seat vibration warning information |
| Level-1 warning | √ | | | |
| Level-2 warning | √ | √ | | |
| Level-3 warning | √ | √ | √ | √ |

In an implementation, as shown in FIG. 5A and FIG. 5B, S104 may be implemented by the level-based warning unit and the warning output module of the decision-making module in the autonomous driving apparatus.

Specifically, the level-based warning unit may send the warning instruction to the warning output module based on the warning level, to trigger the warning output module to output the warning information in response to the warning instruction.

In some embodiments, when the warning output module needs to output a plurality of pieces of warning information, the warning instruction sent by the level-based warning unit may include identification information, and the identification information is in one-to-one correspondence with the warning information. In this way, the warning output module outputs corresponding warning information based on the identification information.

For example, the level-based warning unit may send the warning instruction to the warning output module, where the warning instruction includes three pieces of identification information: a visual warning identifier, a sound warning identifier, and a seat vibration warning identifier. The visual warning identifier corresponds to the visual warning information, the sound warning identifier corresponds to the sound warning information, and the seat vibration warning identifier corresponds to the seat vibration warning information. In this way, in response to the warning instruction, the warning output module outputs, based on the plurality of pieces of identification information in the warning instruction, warning information respectively corresponding to the plurality of pieces of identification information.

In some embodiments, the warning output module may control, in response to the warning instruction, the warning output apparatus of the vehicle to output the warning information. Specifically, the warning output module may send an output instruction to the warning output apparatus of the vehicle, to trigger the warning output apparatus to output the warning information.

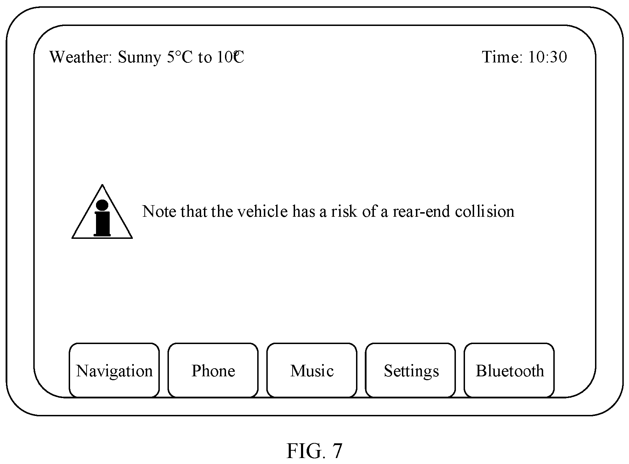

For example, the warning output apparatus may include a central control display apparatus, a head-up display apparatus, a lighting apparatus, a sound box apparatus, a buzzer apparatus, a seat vibration apparatus, and the like. The central control display apparatus, the head-up display apparatus, and the lighting apparatus may be configured to display visual prompt information. For example, FIG. 7 is a diagram of outputting warning information according to an embodiment of this application. As shown in FIG. 7, a central control display apparatus and/or a head-up display apparatus receives and responds to an output instruction sent by a warning output module, and may display visual prompt information "Note that the vehicle has a risk of a rear-end collision" on the display. For another example, the lighting apparatus receives and responds to an output instruction sent by the warning output module, and may emit warning color light such as yellow light or red light. The sound box apparatus may be configured to play voice prompt information. For example, the sound box apparatus receives and responds to an output instruction sent by the warning output module, and may play voice prompt information "Note that the vehicle has a risk of a rear-end collision. Reduce the vehicle speed." The buzzer apparatus may be configured to output buzzer alert prompt information. For example, the buzzer apparatus receives and responds to an output instruction sent by the warning output module, and may play buzzer sound at a preset frequency. The seat vibration apparatus may be configured to output seat vibration prompt information. For example, the seat vibration apparatus receives and responds to an output instruction sent by the warning output module, and may enable a vibration mode at a preset frequency.

It may be understood that the output content and the output apparatus of the warning information are examples for description, and the output content and the output apparatus of the warning information may be set based on an actual requirement. This is not specifically limited in this application.

In some embodiments, similar to the warning instruction, when the warning output apparatus needs to output a plurality of pieces of warning information, the output instruction sent by the warning output module may also include identification information, and the identification information is in one-to-one correspondence with the warning information. In this way, in response to the output instruction, the warning output apparatus outputs, based on a plurality of pieces of identification information in the output instruction, warning information respectively corresponding to the plurality of pieces of identification information.

S105: The autonomous driving apparatus obtains information about feedback behavior that is of the driver and that is based on the warning information.

In this embodiment of this application, after outputting the warning information, the autonomous driving apparatus may obtain the information about the feedback behavior of the driver, to determine a driving status of the driver. The information about the feedback behavior of the driver may represent the driving status of the driver, and the information about the feedback behavior may include a status of a manipulable component of the vehicle. For example, the information about the feedback behavior of the driver includes one or more of the following: an accelerator status, a brake status, steering wheel turning, a wiper status, an air conditioner status, a horn status, a turn light status, and the like.

In some embodiments, when the risk information includes the risk type, to improve efficiency of determining the driving status of the driver by the autonomous driving apparatus, the autonomous driving apparatus may obtain the information that is about the feedback behavior and that corresponds to the risk type. In an example, if the risk type is the rear-end collision, the autonomous driving apparatus may obtain one or more of the accelerator status, the brake status, or the steering wheel turning, to determine whether the driving status of the driver is a normal state, that is, whether the driver performs feedback behavior that can reduce the risk of the rear-end collision. In still another example, if the risk type is the lane departure, the autonomous driving apparatus may obtain one or more of the accelerator status, the brake status, the steering wheel turning, or the turn light status, to determine whether the driving status of the driver is the normal state, that is, whether the driver performs feedback behavior that can reduce the risk of the lane departure. In this way, not only a data volume of the information that is about the feedback behavior and that is obtained by the autonomous driving apparatus can be reduced, but also efficiency of further determining the driving status of the driver by the autonomous driving apparatus based on the information about the feedback behavior can be improved.

In an implementation, as shown in FIG. 5A and FIG. 5B, S105 may be implemented by a second obtaining module in the autonomous driving apparatus. For example, the second obtaining module may obtain the information about the feedback behavior of the driver by using an in-vehicle sensing apparatus. Specifically, the in-vehicle sensing apparatus may obtain initial information about the feedback behavior of the driver, and the second obtaining module may process the initial information about the feedback behavior of the driver, to generate the information about the feedback behavior of the driver. The initial information about the feedback behavior of the driver may be, for example, a controller area network (controller area network, CAN) packet signal of an electronic control unit (electronic controller unit, ECU).

For example, the second obtaining module may obtain the CAN packet signal by using the ECU, and then parse the CAN packet signal to obtain the accelerator status, the brake status, the steering wheel turning, the wiper status, the air conditioner status, the horn status, and the turn light status.

S106: The autonomous driving apparatus determines, based on the information about the feedback behavior, whether the driving status of the driver is an abnormal state.

Specifically, after the autonomous driving apparatus outputs the warning information, when the driving status of the driver is a normal state, after receiving the warning information, the driver performs feedback behavior to reduce the risk of the vehicle. Therefore, the autonomous driving apparatus may determine, based on the obtained information about the feedback behavior of the driver, whether the driving status of the driver is the normal state, that is, whether the driver performs, based on the warning information, feedback behavior that can reduce the risk.

In an implementation, as shown in FIG. 5A and FIG. 5B, S106 may be implemented by a behavior determining unit of the decision-making module in the autonomous driving apparatus. Specifically, the behavior determining unit may determine, based on the information that is about the feedback behavior and that is obtained in S105, whether the driving status of the driver is the normal state, that is, determine whether the driver performs, based on the warning information output by the autonomous driving apparatus in S104, feedback behavior that can reduce the risk.

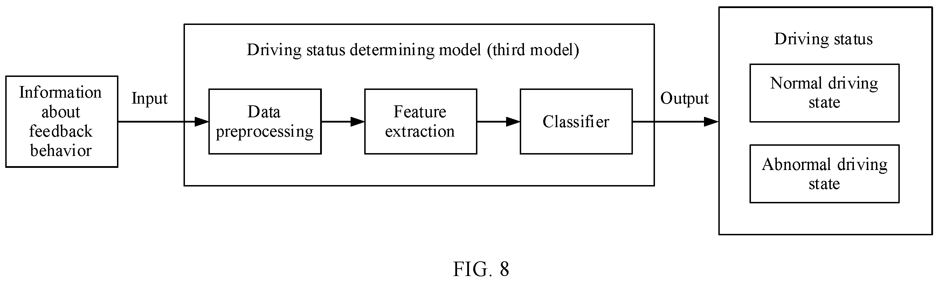

In some embodiments, the behavior determining unit may input the information about the feedback behavior into a third model (namely, a driving status determining model) to obtain the driving status. For example, FIG. 8 is a diagram of a process in which the third model determines the driving status based on the information about the feedback behavior according to an embodiment of this application. As shown in FIG. 8, the third model has a function of determining the driving status based on the information about the feedback behavior. Specifically, steps such as data preprocessing, feature extraction, and classifier classification may be sequentially performed on the information about the feedback behavior by using the third model, to output the driving status, for example, a normal driving state or an abnormal driving state.

In some embodiments, the third model may be obtained through construction by using a classification machine learning algorithm. The classification machine learning algorithm may be an LR algorithm, an NB algorithm, a KNN algorithm, a DT algorithm, or an SVM algorithm. A construction algorithm used by the third model and a specific construction process are not specifically limited in this application.

In some embodiments, the third model may determine the driving status based on a mapping relationship between the information about the feedback behavior at different risks and driving statuses. Table 3 is a mapping table between the information about the feedback behavior at different risks and the driving statuses according to an embodiment of this application. As shown in Table 3, for example, the information about the feedback behavior includes the accelerator status, the brake status, the steering wheel turning, the horn status, and the turn light status. The accelerator status may include accelerator stepped down and accelerator released. The brake status may include brake stepped down and brake released. The behavior determining unit may obtain the driving status by using the third model, and the driving status includes an abnormal state or a normal state.

In an example, as shown in data numbered 1, 5, and 9 in Table 3, when the risk type is the rear-end collision, the information that is about the feedback behavior and that is obtained by the behavior determining unit may include the accelerator status, the steering wheel turning, and the horn status. When the obtained accelerator status indicates that the feedback behavior of the driver is stepping down the accelerator, the obtained steering wheel turning indicates that the feedback behavior of the driver is turning a steering wheel, and the obtained horn status indicates that the feedback behavior of the driver is honking a horn, the behavior determining unit may determine that the driving status of the driver is the abnormal state.

In still another example, as shown in data numbered 3, 7, and 11 in Table 3, when the risk type is the lane departure, the information that is about the feedback behavior and that may be obtained by the behavior determining unit includes the brake status, the steering wheel turning, and the turn light status. When the obtained brake status indicates that the feedback behavior of the driver is stepping down the brake, the obtained steering wheel turning indicates that the feedback behavior of the driver is turning the steering wheel, and the obtained turn light status indicates that the feedback behavior of the driver is turning on a turn light, the behavior determining unit may determine that the driving status of the driver is the normal state.

**Table 3**

| Number | Risk type and risk level | Feedback behavior 1 | Feedback behavior 2 | Feedback behavior 3 | Driving status |
|---|---|---|---|---|---|
| 1 | Rear-end collision level 1 | Stepping down an accelerator | Turning a steering wheel | Honking a horn | Abnormal |
| 2 | Scratching level 1 | Stepping down the accelerator | No steering wheel turning | Honking the horn | Abnormal |
| 3 | Lane departure level 1 | Stepping down a brake | Turning the steering wheel | Turning on a turn light | Normal |
| 4 | Red-light running level 1 | Stepping down the brake | No steering wheel turning | Releasing the accelerator | Normal |
| 5 | Rear-end collision level 2 | Stepping down the accelerator | Turning the steering wheel | Honking the horn | Abnormal |
| 6 | Scratching level 2 | Stepping down the accelerator | No steering wheel turning | Honking the horn | Abnormal |
| 7 | Lane departure level 2 | Stepping down the brake | Turning the steering wheel | Turning on the turn light | Normal |
| 8 | Red-light running level 2 | Stepping down the brake | No steering wheel turning | Releasing the accelerator | Normal |
| 9 | Rear-end collision level 3 | Stepping down the accelerator | Turning the steering wheel | Honking the horn | Abnormal |
| 10 | Scratching level 3 | Stepping down the accelerator | No steering wheel turning | Honking the horn | Abnormal |
| 11 | Lane departure level 3 | Stepping down the brake | Turning the steering wheel | Turning on the turn light | Normal |
| 12 | Red-light running level 3 | Stepping down the brake | No steering wheel turning | Releasing the accelerator | Normal |

It should be noted that the mapping table that is shown in Table 3 and that is between the information about the feedback behavior at different risks and the driving statuses is merely an example for description. Specifically, the information about the feedback behavior corresponding to each risk and the rule (for example, setting a weight coefficient for the information about each piece of feedback behavior) for determining the driving status based on the information about the feedback behavior may be set based on an actual application situation. This is not specifically limited in this application.

S107: When the driving status is the abnormal state, the autonomous driving apparatus determines whether the warning level is greater than or equal to a warning threshold.

Specifically, when the autonomous driving apparatus determines that the driving status of the driver is the abnormal state in S106, the autonomous driving apparatus further determines whether the warning level is greater than or equal to the warning threshold. In an implementation, as shown in FIG. 5A and FIG. 5B, S107 may be implemented by the behavior determining unit of the decision-making module in the autonomous driving apparatus. The warning threshold is a preset warning level threshold. A lower warning threshold indicates higher timeliness of vehicle switching by the behavior determining unit. To be specific, when the risk of the vehicle is low, the behavior determining unit can switch the vehicle to the autonomous driving mode in time. A higher warning threshold indicates a lower risk of incorrect determination for switching to the autonomous driving mode of the vehicle by the behavior determining unit and higher accuracy. The warning threshold may be set based on a use requirement. This is not specifically limited in this application.

For example, the warning levels include the first-level warning, the second-level warning, the third-level warning, and the fourth-level warning. In an example, when the warning threshold is a level 2, after determining that the driving status of the driver is the abnormal state, the behavior determining unit determines whether a current warning level is greater than or equal to the level 2. Specifically, when the warning level is greater than or equal to the warning threshold, that is, when the current warning level is the level-2 warning, the leve-3 warning, or the level-4 warning, S108 may be performed to switch the driving mode of the vehicle from the manual driving mode to the autonomous driving mode. When the vehicle has a low risk, if the driving status is the abnormal state, the behavior determining unit switches the vehicle to the autonomous driving mode. In this way, timeliness of switching to the autonomous driving mode of the vehicle by the behavior determining unit can be improved.

In still another example, when the warning threshold is a level 3, after determining that the driving status of the driver is the abnormal state, the behavior determining unit determines whether the current warning level is greater than or equal to the level 3. If the current warning level is the level-1 warning or the level-2 warning, S108 is not performed. If the current warning level is the level-3 warning or the level-4 warning, S108 is performed. Specifically, when the warning level is less than the warning threshold, that is, when the vehicle has a low risk (for example, the level 1 or the level 2), to avoid a misoperation of the driver, which causes the behavior determining unit to incorrectly determine that the driving status is the abnormal state, the behavior determining unit does not switch the vehicle to the autonomous driving mode. When the warning level is greater than or equal to the warning threshold, that is, when the vehicle has a high risk (for example, the level 3 or the level 4), the behavior determining unit may switch the vehicle to the autonomous driving mode in time. In this way, the high risk of the vehicle can be reduced in time, and accuracy of switching to the autonomous driving mode of the vehicle by the behavior determining unit can be improved.

S108: The autonomous driving apparatus switches the driving mode of the vehicle from the manual driving mode to the autonomous driving mode when the warning level is greater than or equal to the warning threshold, to enable the vehicle to enter an autonomous driving state.

In an implementation, S108 may be implemented by the behavior determining unit of the decision-making module in the autonomous driving apparatus. Specifically, if it is determined in S107 that the warning level is greater than or equal to the warning threshold, the behavior determining unit may perform S108 to switch the driving mode of the vehicle to the autonomous driving mode, to enable the vehicle to enter the autonomous driving state. This reduces the risk of the vehicle in time. In this way, driving safety of the vehicle can be improved.

In some embodiments, the decision-making module may control the autonomous driving system of the vehicle to take over the vehicle, to enable the vehicle to enter the autonomous driving state. Specifically, the decision-making module may send a switching instruction to the autonomous driving system. The autonomous driving system receives and responds to the switching instruction to take over the vehicle, and controls driving of the vehicle in time, to reduce the risk of the vehicle.

In some embodiments, the method further includes: When the warning level is less than the warning threshold, the autonomous driving apparatus performs S 101 again to obtain current traveling data and environment data of the vehicle again, to further determine current risk information of the vehicle; and when the warning level is greater than or equal to the warning threshold, the autonomous driving apparatus performs S108.

In some embodiments, to further improve accuracy of switching to the autonomous driving mode of the vehicle by the autonomous driving apparatus, as shown in FIG. 4A and FIG. 4B, when the warning level is less than the warning threshold, the method further includes the following steps.

S109: The autonomous driving apparatus obtains physiological feature data of the driver when the warning level is less than the warning threshold.

The physiological feature data represents a physiological status of the driver. For example, the physiological feature data may include a head movement track, eye status information, pulse data, heart rate data, blood pressure data, or an exhalation gas alcohol concentration of the driver.

In an implementation, as shown in FIG. 5A and FIG. 5B, S109 may be implemented by the second obtaining module in the autonomous driving apparatus. For example, the second obtaining module may obtain the physiological feature data of the driver by using the in-vehicle sensing apparatus. Specifically, the in-vehicle sensing apparatus may obtain initial physiological feature data of the driver, and the second obtaining module may process the initial physiological feature data of the driver to generate the physiological feature data of the driver. The initial physiological feature data of the driver may include, for example, image data and distance information from a 3D camera; a transmitted optical signal, a received reflected optical signal, an optical/electrical signal, and an electrocardiogram signal of a wearable band or a watch; and a chemical reaction electrical signal of an alcohol sensor.

In an example, the second obtaining module may obtain the image data and the distance information of a head of the driver by using the 3D camera. Then, the second obtaining module obtains the head movement track and the eye status information of the driver based on the image data and the distance information by using deep learning algorithm.

In still another example, the second obtaining module may further obtain a transmitted optical signal and a received reflected optical signal of an optical heart rate sensor by using the wearable band or the watch. Then, the second obtaining module determines the pulse data and the heart rate data by analyzing fluctuation change frequencies of the transmitted optical signal and the received reflected optical signal.

In another example, the second obtaining module may alternatively obtain the optical/electrical signal and the electrocardiogram signal by using the wearable band or the watch. Then, the second obtaining module may determine the blood pressure data by analyzing the optical/electrical signal and the electrocardiogram signal.

In still another example, the second obtaining module may further obtain the chemical reaction electrical signal by using the alcohol sensor. Then, the second obtaining module determines, based on a change of the chemical reaction electrical signal, alcohol content exhaled by the driver, so that the exhalation gas alcohol concentration can be determined.

S110: The autonomous driving apparatus determines, based on the physiological feature data, whether a physiological status of the driver is an abnormal state.

In an implementation, as shown in FIG. 5A and FIG. 5B, S110 may be implemented by the behavior determining unit of the decision-making module in the autonomous driving apparatus. Specifically, the behavior determining unit may determine, based on the physiological feature data of the driver obtained in S109, whether the physiological status of the driver is the abnormal state, that is, determine whether the driver has an abnormal physiological state, for example, fatigue driving, drunk driving, or loss of consciousness caused by illness.

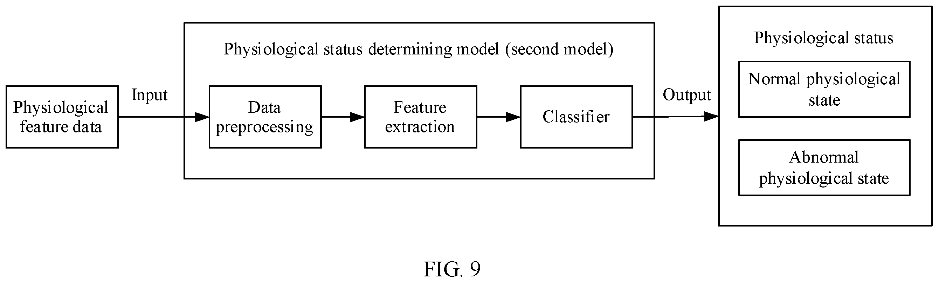

In some embodiments, the behavior determining unit may input the physiological feature data into a second model (namely, a physiological status determining model) to obtain the driving status. For example, FIG. 9 is a diagram of a process in which the second model determines the physiological status based on the physiological feature data according to an embodiment of this application. As shown in FIG. 9, the second model has a function of determining the physiological status based on the physiological feature data. Specifically, steps such as data preprocessing, feature extraction, and classifier classification may be sequentially performed on the physiological feature data input into the second model, to output the physiological status, for example, a normal physiological state or an abnormal physiological state.

In some embodiments, the second model may be obtained through construction by using a classification machine learning algorithm. The classification machine learning algorithm may be an LR algorithm, an NB algorithm, a KNN algorithm, a DT algorithm, or an SVM algorithm. A construction algorithm used by the third model and a specific construction process are not specifically limited in this application.

In some embodiments, the second model may determine the physiological status based on a mapping relationship between the physiological feature data and the physiological status. Table 4 is a mapping table between the physiological feature data and physiological statuses according to an embodiment of this application. As shown in Table 4, for example, the physiological feature data includes the head movement track, the heart rate data, and the exhalation gas alcohol concentration.

In an example, as shown by data numbered 1 in Table 4, when the head movement track does not meet a fatigue driving threshold, the heart rate data does not meet the fatigue driving threshold, and the exhalation gas alcohol concentration is less than a drunk driving threshold, the behavior determining unit may determine, based on the physiological feature data obtained by the autonomous driving apparatus, that the physiological status of the driver is a normal state.

In an example, as shown by data numbered 2 in Table 4, when the head movement track meets the fatigue driving threshold, the heart rate data meets the fatigue driving threshold, and the exhalation gas alcohol concentration is less than the drunk driving threshold, the behavior determining unit may determine, based on the physiological feature data obtained by the autonomous driving apparatus, that the physiological status of the driver is an abnormal state. In an implementation, the behavior determining unit may further determine that the physiological status of the driver is the fatigue driving in the abnormal state. In this way, accuracy of determining the physiological status of the driver can be further improved.

In an example, as shown by data numbered 3 in Table 4, when the head movement track does not meet a fatigue driving threshold, the heart rate data does not meet the fatigue driving threshold, and the exhalation gas alcohol concentration is greater than the drunk driving threshold, the behavior determining unit may determine, based on the physiological feature data obtained by the autonomous driving apparatus, that the physiological status of the driver is the abnormal state. In an implementation, the behavior determining unit may further determine that the physiological status of the driver is the drunk driving in the abnormal state. In this way, accuracy of determining the physiological status of the driver can be further improved.

**Table 4**

| Number | Physiological feature data 1 | Physiological feature data 2 | Physiological feature data 3 | Physiological status |
|---|---|---|---|---|
| 1 | A head movement track does not meet a fatigue driving threshold | Heart rate data does not meet a fatigue driving threshold | An exhalation gas alcohol concentration is less than a drunk driving threshold | Normal |
| 2 | The head movement track meets the fatigue driving threshold | The heart rate data meets the fatigue driving threshold | An exhalation gas alcohol concentration is less than the drunk driving threshold | Abnormal |
| 3 | The head movement track does not meet the fatigue driving threshold | The heart rate data does not meet the fatigue driving threshold | The exhalation gas alcohol concentration is greater than the drunk driving threshold | Abnormal |

It should be noted that the mapping table that is shown in Table 4 and that is between the physiological feature data and the physiological statuses is merely an example for description. Specifically, a quantity of pieces of physiological feature data, a specific threshold (for example, the fatigue driving threshold or the drunk driving threshold), and the rule for determining the physiological status based on the physiological feature data may be set based on an actual application situation. This is not specifically limited in this application.

Generally, when the physiological status of the driver is the abnormal state, it may indicate that the driver cannot autonomously operate the vehicle to reduce the risk of the vehicle. Therefore, when the behavior determining unit determines that the physiological status of the driver is the abnormal state, the behavior determining unit performs S108 to switch the driving mode of the vehicle from the manual driving mode to the autonomous driving mode in time, to enable the vehicle to enter the autonomous driving state. This improves the driving safety of the vehicle.

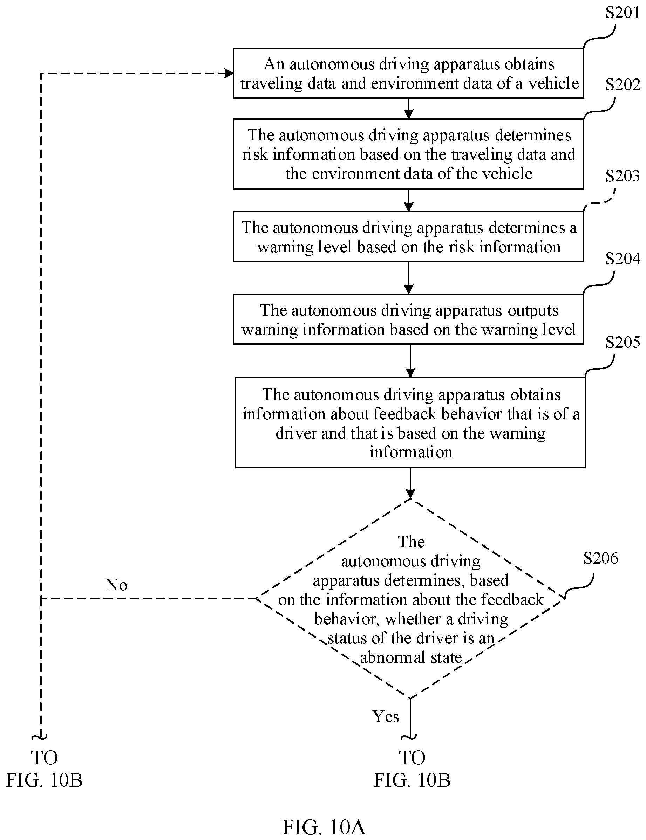

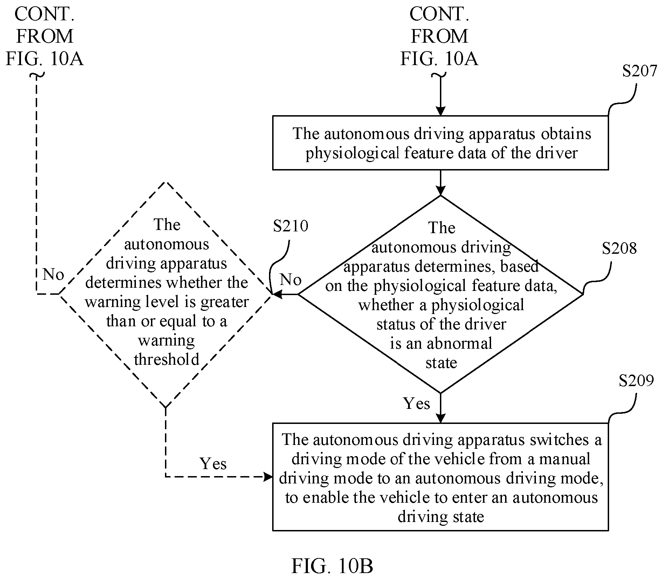

In some embodiments, to further improve timeliness of switching to the autonomous driving mode of the vehicle by the autonomous driving apparatus and the driving safety of the vehicle, FIG. 10A and FIG. 10B are a diagram of another autonomous driving method according to an embodiment of this application. The method specifically includes S201 to S210.

S201: An autonomous driving apparatus obtains traveling data and environment data of a vehicle.

S202: The autonomous driving apparatus determines risk information based on the traveling data and the environment data of the vehicle.

S203: The autonomous driving apparatus determines a warning level based on the risk information.

S204: The autonomous driving apparatus outputs warning information based on the warning level.

S205: The autonomous driving apparatus obtains information about feedback behavior that is of the driver and that is based on the warning information.

S206: The autonomous driving apparatus determines, based on the information about the feedback behavior, whether a driving status of a driver is an abnormal state.

S201 to S206 are the same as S101 to S106, and details are not described herein again. After S206, the method further includes the following steps.

S207: The autonomous driving apparatus obtains physiological feature data of the driver when the driving status is an abnormal state.

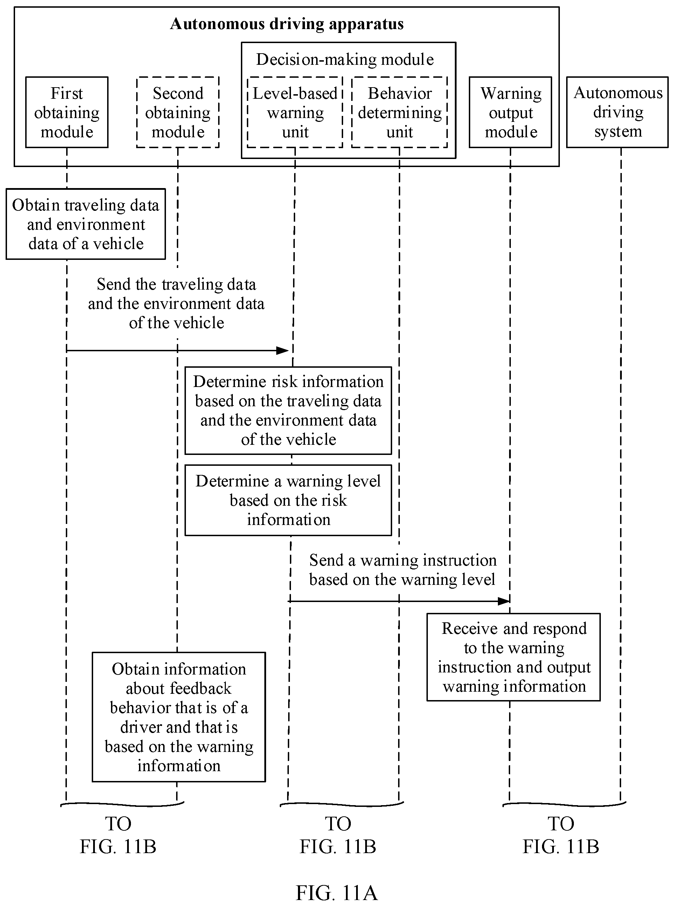

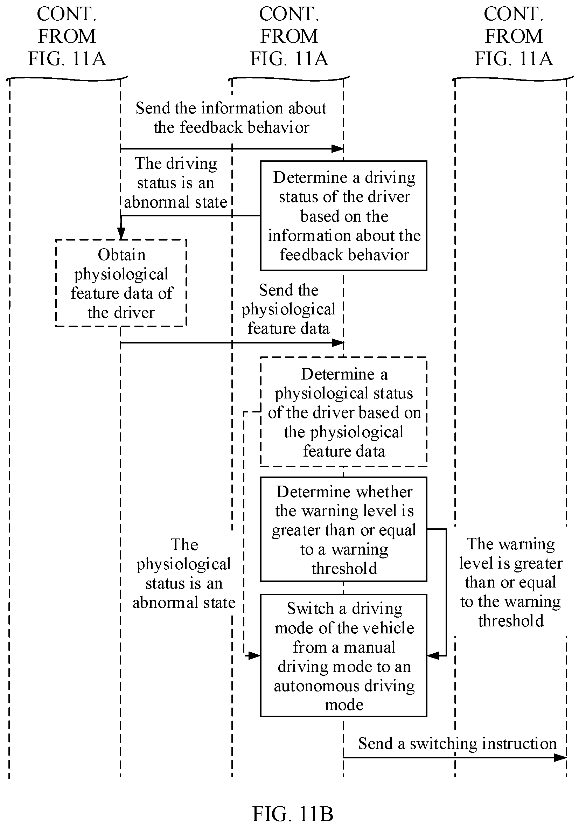

In an implementation, as shown in FIG. 11A and FIG. 11B, S207 may be implemented by a second obtaining module in the autonomous driving apparatus.

In some embodiments, when the driving status is a normal state, the autonomous driving apparatus re-performs S201 to obtain the traveling data and the environment data of the vehicle again.

S208: The autonomous driving apparatus determines, based on the physiological feature data, whether a physiological status of the driver is an abnormal state.

In an implementation, as shown in FIG. 11A and FIG. 11B, S208 may be implemented by a behavior determining unit of a decision-making module in the autonomous driving apparatus.

S209: The autonomous driving apparatus switches a driving mode of the vehicle from a manual driving mode to an autonomous driving mode when the physiological status of the driver is an abnormal state, to enable the vehicle to enter an autonomous driving state.

In an implementation, as shown in FIG. 11A and FIG. 11B, S209 may be implemented by the behavior determining unit of the decision-making module in the autonomous driving apparatus.

S210: When the physiological status is a normal state, the autonomous driving apparatus determines whether the warning level is greater than or equal to a warning threshold.

The autonomous driving apparatus performs S209 when the warning level is greater than or equal to the warning threshold, to switch the driving mode of the vehicle from the manual driving mode to the autonomous driving mode, so as to enable the vehicle to enter the autonomous driving state.

Specifically, for specific implementations of S207 and S208, refer to S109 and S110. For a specific implementation of S209, refer to S108. For a specific implementation of S210, refer to S107. Details are not described herein again.

In this embodiment, when the driving status is the abnormal state, the autonomous driving apparatus first obtains the physiological feature data of the driver. Then, the autonomous driving apparatus determines the physiological status of the driver based on the physiological feature data. When the physiological status is the abnormal state, that is, when the physiological status of the driver is the abnormal state and consequently the driver cannot autonomously operate the vehicle, the autonomous driving apparatus no longer considers the risk level (namely, a magnitude of the risk level of the vehicle), and switches the vehicle to the autonomous driving mode in time. In this way, driving safety of the vehicle can be further improved.

When the physiological status is the normal state, that is, when the driver can autonomously operate the vehicle, the autonomous driving apparatus switches the vehicle to the autonomous driving mode based on the risk level (namely, the magnitude of the risk level of the vehicle). In this way, accuracy of switching to the autonomous driving mode of the vehicle by the autonomous driving apparatus can be improved.

It may be understood that, to implement the foregoing functions, the autonomous driving apparatus includes corresponding hardware structures and/or software modules for performing the functions. A person skilled in the art should easily be aware that, in combination with algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, functional modules of the autonomous driving apparatus may be grouped based on the foregoing method examples. For example, each function module may be grouped based on each corresponding function, or two or more functions may be integrated into one processing module. The integrated module may be implemented in a form of hardware, or may be implemented in a form of software functional module. It should be noted that, in embodiments of this application, module grouping is an example, and is merely logical function grouping. In actual implementation, another grouping manner may be used.

An embodiment of this application further provides a vehicle, including at least one sensor, the foregoing autonomous driving apparatus, and a warning output apparatus. The at least one sensor is configured to obtain initial traveling data and initial environment data of the vehicle, where the initial traveling data and the initial environment data are used by the autonomous driving apparatus to generate the traveling data and the environment data. The warning output apparatus is configured to output warning information to a driver of the vehicle.

The vehicle in this application may further include an autonomous driving system, used to take over the vehicle after the autonomous driving apparatus switches the vehicle to an autonomous driving mode.

An embodiment of this application further provides an electronic device. The electronic device may include a memory and one or more processors. The memory is coupled to the processor. The memory is configured to store computer program code, and the computer program code includes computer instructions. When the processor executes the computer instructions, the electronic device may perform functions or steps performed by the autonomous driving apparatus in the foregoing method embodiments.

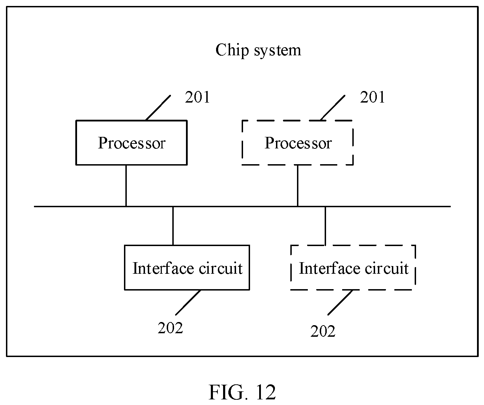

An embodiment of this application further provides a chip system. The chip system may be applied to the autonomous driving apparatus in the foregoing embodiments. As shown in FIG. 12, the chip system includes at least one processor 201 and at least one interface circuit 202. The processor 201 may be a processor in the foregoing electronic device. The processor 201 and the interface circuit 202 may be interconnected through a line. The processor 201 may receive computer instructions from the memory of the electronic device through the interface circuit 202 and execute the computer instructions. When the computer instructions are executed by the processor 201, the electronic device may be enabled to perform steps performed by the autonomous driving apparatus in the foregoing embodiments. Certainly, the chip system may further include another discrete device. This is not specifically limited in embodiments of this application.

An embodiment of this application further provides a computer-readable storage medium, configured to store computer instructions run by the foregoing autonomous driving apparatus.

The foregoing storage medium includes any medium that can store program code, for example, a USB flash drive, a removable hard disk, a read-only memory (read-only memory, ROM), a random access memory (random access memory, RAM), a magnetic disk, or an optical disc.

An embodiment of this application further provides a computer program product, including computer instructions run by the foregoing autonomous driving apparatus.

The electronic device, the chip system, the computer storage medium, or the computer program product provided in this application is configured to perform the corresponding method provided above. Therefore, for beneficial effect that can be achieved by the electronic device, the chip system, the computer storage medium, or the computer program product, refer to the beneficial effect in the corresponding method provided above. Details are not described herein again.

The foregoing descriptions about implementations allow a person skilled in the art to clearly understand that, for the purpose of convenient and brief description, division of the foregoing functional modules is used as an example for illustration. In actual application, the foregoing functions can be allocated to different functional modules and implemented based on a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiments are merely examples. For example, division into the modules or units is merely logical function division, and may be other division during actual implementation. For example, a plurality of units or components may be combined or may be integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, that is, may be located in one place, or may be distributed in different places. Some or all of the units may be selected based on an actual requirement to achieve the objectives of the solutions of embodiments.

In addition, functional units in embodiments of this application may be integrated into one processing unit, each of the units may exist alone physically, or two or more units may be integrated into one unit.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. An autonomous driving method, applied to a vehicle, wherein the method comprises:
obtaining traveling data and environment data of the vehicle when a driving mode of the vehicle is a manual driving mode;
when the vehicle has a risk, outputting warning information based on the traveling data and the environment data of the vehicle, wherein the warning information is used to prompt a driver that the vehicle has the risk;
obtaining information about feedback behavior that is of the driver and that is based on the warning information;
determining a driving status of the driver based on the information about the feedback behavior, wherein the driving status comprises an abnormal state or a normal state; and
switching the driving mode of the vehicle from the manual driving mode to the autonomous driving mode when the driving status is the abnormal state, to enable the vehicle to enter an autonomous driving state.

2. The method according to claim 1, wherein outputting the warning information based on the traveling data and the environment data of the vehicle comprises:
determining a warning level based on the traveling data and the environment data of the vehicle, wherein the warning level indicates a magnitude of the risk that is to occur on the vehicle; and
outputting the warning information corresponding to the warning level.

3. The method according to claim 2, wherein a higher warning level indicates more types of prompt information comprised in corresponding warning information; and
the warning information comprises one or more of the following: visual prompt information, sound prompt information, or seat vibration prompt information.

4. The method according to claim 2 or 3, wherein determining the warning level based on the traveling data and the environment data of the vehicle comprises:
determining risk information based on the traveling data and the environment data of the vehicle, wherein the risk information comprises a risk level; and
determining the warning level based on the risk level.

5. The method according to claim 4, wherein the risk information further comprises a risk type;
the information about the feedback behavior corresponds to the risk type;
the risk type comprises one or more of the following: a rear-end collision, scratching, lane departure, red-light running, speeding, or an obstacle; and
the information about the feedback behavior comprises a status of a manipulable component of the vehicle.

6. The method according to claim 4 or 5, wherein determining the risk information based on the traveling data and the environment data of the vehicle comprises:
inputting the traveling data and the environment data of the vehicle into a first model to obtain the risk information.

7. The method according to any one of claims 2 to 6, wherein before the switching the driving mode of the vehicle from the manual driving mode to the autonomous driving mode, the method further comprises:
determining that one or more of a physiological status of the driver and the warning level meet a preset condition, wherein
the preset condition comprises: the physiological status is an abnormal state, or the warning level is greater than or equal to a warning threshold, or the physiological status is a normal state and the warning level is greater than or equal to a warning threshold.

8. The method according to claim 7, further comprising:
obtaining physiological feature data of the driver; and
inputting the physiological feature data into a second model to obtain the physiological status.

9. The method according to any one of claims 1 to 8, wherein determining the driving status of the driver based on the information about the feedback behavior comprises:
inputting the information about the feedback behavior into a third model to obtain the driving status.

10. An autonomous driving apparatus, comprising a first obtaining module, a decision-making module, a warning output module, and a second obtaining module, wherein
the first obtaining module is configured to obtain traveling data and environment data of the vehicle when a driving mode of the vehicle is a manual driving mode;
the decision-making module is configured to: when the vehicle has a risk, control, based on the traveling data and the environment data of the vehicle, the warning output module to output warning information, wherein the warning information is used to prompt a driver that the vehicle has the risk;
the second obtaining module is configured to obtain information about feedback behavior that is of the driver and that is based on the warning information; and
the decision-making module is further configured to: determine a driving status of the driver based on the information about the feedback behavior, wherein the driving status comprises an abnormal state or a normal state; and switch the driving mode of the vehicle from the manual driving mode to the autonomous driving mode when the driving status is the abnormal state, to enable the vehicle to enter an autonomous driving state.

11. The apparatus according to claim 10, wherein the decision-making module is specifically configured to:
determine a warning level based on the traveling data and the environment data of the vehicle, wherein the warning level indicates a magnitude of the risk that is to occur on the vehicle; and
control the warning output module to output the warning information corresponding to the warning level.

12. The apparatus according to claim 11, wherein the decision-making module is further configured to:
determine that one or more of a physiological status of the driver and the warning level meet a preset condition, wherein
the preset condition comprises: the physiological status is an abnormal state, or the warning level is greater than or equal to a warning threshold, or the physiological status is a normal state and the warning level is greater than or equal to a warning threshold.

13. The apparatus according to any one of claims 10 to 12, wherein the apparatus is a vehicle-mounted apparatus.

14. The apparatus according to any one of claims 10 to 12, wherein the apparatus is a server.

15. A vehicle, comprising at least one sensor, the autonomous driving apparatus according to any one of claims 10 to 13, and a warning output apparatus, wherein
the at least one sensor is configured to obtain initial traveling data and initial environment data of the vehicle, wherein the initial traveling data and the initial environment data are used by the autonomous driving apparatus to generate the traveling data and the environment data; and
the warning output apparatus is configured to output warning information to a driver of the vehicle.

16. The vehicle according to claim 15, further comprising an autonomous driving system, used to take over the vehicle after the autonomous driving apparatus switches the vehicle to an autonomous driving mode.

17. An electronic device, comprising a memory and one or more processors, wherein the memory is coupled to the processor, the memory stores computer program code, the computer program code comprises computer instructions, and when the computer instructions are executed by the processor, the electronic device is enabled to perform the method according to any one of claims 1 to 9.
